(19) Europäisches Patentamt
European Patent Office
Office européen des brevets

(11) **EP 3 627 365 B1**

(12) **EUROPEAN PATENT SPECIFICATION**

(45) Date of publication and mention
of the grant of the patent:
**17.02.2021 Bulletin 2021/07**

(51) Int Cl.:
***G06F 21/32*** *(2013.01)*

(21) Application number: **18837751.9**

(22) Date of filing: **19.06.2018**

(86) International application number:
**PCT/CN2018/091871**

(87) International publication number:
**WO 2019/019836 (31.01.2019 Gazette 2019/05)**

(54) **UNLOCKING CONTROL METHOD AND RELATED PRODUCT**

ENTRIEGELUNGSSTEUERUNGSVERFAHREN UND ZUGEHÖRIGES PRODUKT

PROCÉDÉ DE COMMANDE DE DÉVERROUILLAGE ET PRODUIT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2017 CN 201710631589**

(43) Date of publication of application:
**25.03.2020 Bulletin 2020/13**

(73) Proprietor: **GUANGDONG OPPO MOBILE TELECOMMUNICATIONS CORP., LTD.**
**Wusha, Chang'an**
**Dongguan,**
**Guangdong 523860 (CN)**

(72) Inventors:
• **ZHOU, Yibao**
**Dongguan**
**Guangdong 523860 (CN)**

• **ZHANG, Haiping**
**Dongguan**
**Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 188 406          WO-A1-2016/060738**
**CN-A- 104 392 155          CN-A- 104 571 869**
**CN-A- 104 679 245          CN-A- 105 812 542**
**CN-A- 107 450 708          US-A1- 2016 180 068**

• **NAG ABHIJIT KUMAR ET AL: "An Adaptive Approach Towards the Selection of Multi-Factor Authentication", 2015 IEEE SYMPOSIUM SERIES ON COMPUTATIONAL INTELLIGENCE, IEEE, 7 December 2015 (2015-12-07), pages 463-472, XP032843089, DOI: 10.1109/SSCI.2015.75 ISBN: 978-1-4799-7560-0 [retrieved on 2016-01-07]**

**Description**

**TECHNICAL FIELD**

The present disclosure relates to the field of mobile terminals, and in particular to a method of unlocking control, a mobile terminal, and an apparatus.

**BACKGROUND**

As technologies about mobile terminals continuously develop, usage of a mobile terminal, such as a mobile phone, a computer, a tablet, and the like, has become increasingly popular, and biometric identification is used for unlocking. The biometric identification includes fingerprint identification, iris recognition, sclera recognition, face identification, voiceprint recognition, vein recognition, and the like.

WO 2016060738 A1 discloses a computing device processor. The computing device processor may be configured with processor-executable instructions to implement methods of using behavioral analysis and machine learning techniques to identify, prevent, correct, and/or otherwise respond to malicious or performance-degrading behaviors of the computing device. As part of these operations, the processor may perform multifactor authentication operations that include determining one or more of a transaction type criticality value, a user confidence value, a software integrity confidence value, and a historical behavior value, using the one or more of these values to determine a number of authentication factors that are be evaluated when authenticating a user of the computing device, and authenticating the user by evaluating the determined number of authentication factors.

EP 3188406 A1 discloses an identity authentication method. The method relates to the field of information technologies, so that when a surrounding environment is not favorable for user authentication, and a current environment is relatively safe, a matching threshold for performing authentication by user equipment can be reduced, avoiding a case in which identity authentication needs to be repeated multiple times due to impact of a surrounding environment, and improving accuracy of identity authentication. The method includes: first detecting a scenario in which the user equipment is located; determining, from at least two different authentication levels, an authentication level corresponding to the scenario in which the user equipment is located; then acquiring current biometric feature data entered by a user; and finally determining, according to the current biometric feature data, preconfigured biometric feature data, and the authentication level, whether identity authentication succeeds. The present invention is applicable to user identity authentication.

**SUMMARY OF THE DISCLOSURE**

The present invention is defined by the independent claims. According to a first aspect of the present disclosure, a method of unlocking control performed by a mobile terminal may be provided and include: acquiring a scene parameter of a mobile terminal; acquiring an environment parameter of the mobile terminal; selecting a target multi-biometric identification mode corresponding to the scene parameter and the environment parameter from M multi-biometric identification modes stored in the mobile terminal, wherein the M is an integer greater than 1; and collecting S pieces of biometric information through a target biometric collection module corresponding to the target multi-biometric identification mode, and unlocking the mobile terminal in response to the S pieces of biometric information being determined as passing verification, wherein the S is an integer greater than 1. The scene parameter includes at least one selected from the group consisting of: a type of the application, occupancy of network speed, data transmission, and a type of the data. The target multi-biometric identification mode is selected based on a performance parameter, wherein the parameter is recorded in a verification record of a verification history, and the performance parameter comprises time consumed for each verification, a matching score of each verification, and power consumption of a biometric collection apparatus for each verification.

According to a second aspect of the present disclosure, an apparatus for unlocking control may be provided and include: an acquisition unit, configured to acquire a scene parameter and an environment parameter of the mobile terminal; a selection unit, configured to select a target multi-biometric identification mode corresponding to the scene parameter and the environment parameter from M multi-biometric identification modes stored in the mobile terminal, wherein the M is an integer greater than 1; a collection unit, configured to S pieces of biometric information, wherein the S is an integer greater than or equal to 1; and an unlocking unit, configured to unlock the mobile terminal in response to the S pieces of biometric information passing verification. The scene parameter includes at least one selected from the group consisting of: a type of the application, occupancy of network speed, data transmission, and a type of the data. The target multi-biometric identification mode is selected based on a performance parameter recorded in a verification record of a verification history, and the performance parameter comprises time consumed for each verification, a matching score of each verification, and power consumption of a biometric collection apparatus for each verification.

According to a third aspect of the present disclosure, a mobile terminal may be provided and include a processor, a non-transitory memory, a communication interface, and one or more programs. The one or more programs are stored in the non-transitory memory and configured to be executed by the processor to perform all or a part of the operations described in the method according to the first aspect.

## BRIEF DESCRIPTION OF THE DRAWINGS

In order to more clearly illustrate technical solutions of embodiments of the present disclosure and technical solutions in the related art, drawings required to be used in the embodiments will be briefly described in the following. Evidently, the drawings in the following description are some embodiments of the present disclosure, and according to these drawings, those ordinarily skilled in the art can further obtain other drawings without any creative work

FIG. 1 is a structural schematic view of a mobile terminal according to an embodiment of the present disclosure.
FIG. 2 is a flow chart illustrating a method of unlocking control according to an embodiment of the present disclosure.
FIG. 3 is a structural diagram of an apparatus for unlocking control according to an embodiment of the present disclosure.
FIG. 4 is a structural diagram of another mobile terminal according to an embodiment of the present disclosure.

## DETAILED DESCRIPTION

In order to allow the skilled in the related art to understand the present disclosure better, the drawings will be incorporated with the embodiments of the present to illustrate the technical solutions of the present disclosure clearly and comprehensively. On the bases of the embodiments of the present disclosure, the ordinary skilled in the art may obtain other embodiments without any creative work.

Terms used in the specification, claims, and the drawings, such as "first", "second", and the like, are for purposes to distinct different objects only, but not to define a specific sequence. In addition, terms, such as "include", "comprise", and other transformed expressions, indicates non-exclusive inclusion. For example, a process, a method, a system, a product, or a device including a series of operations or units is not limited to include the listed operations and units only, but may alternatively include unlisted operations and units, or may alternatively include other operations and units intrinsically contained in the process, in the method, in the product or the device.

Referring to an "embodiment" as mentioned in the present disclosure, particular features, structures, or properties may be included in at least one embodiments of the present disclosure. The "embodiments" appeared in any sentence of the present disclosure may not refer to a same embodiment, and may not refer to an alternative embodiment or an embodiment exclusive to or independent from other embodiments.

Mobile terminals involved in the embodiments of the present disclosure may include a hand-held device with a wireless communication function, a vehicle equipment, a wearable device, a computing device, or other process equipments connected to a wireless modem, and various types of user equipments (UE), a mobile station, a terminal device, and the like. To give an easy description, the above-mentioned devices and equipments are generically called mobile terminals. The embodiments of the present disclosure will be illustrated in details hereafter.

Embodiments of the present disclosure may provide a method of unlocking control and related products, such that when the mobile terminal is performing any operation of unlocking, a possibility of invoking all biometric collection apparatus configured on the mobile terminal in response to the unlocking may be reduced, solving an issue of increasing power consumption.

Embodiments of the present disclosure may provide a mobile terminal, arranged with a biometric collection apparatus. The biometric collection apparatus includes at least a fingerprint collection module, an iris collection module, and a face collection module. The biometric collection apparatus may further include a voice collection module, a vein collection module, a sclera collection module, and other biometric collection modules. The fingerprint collection module may be a fingerprint sensor module, the iris collection module may include an infrared light source and an infrared camera, and the face collection module may include a generic camera module, such as a front camera. The embodiments of the present disclosure may be illustrated in details with reference to the drawings.

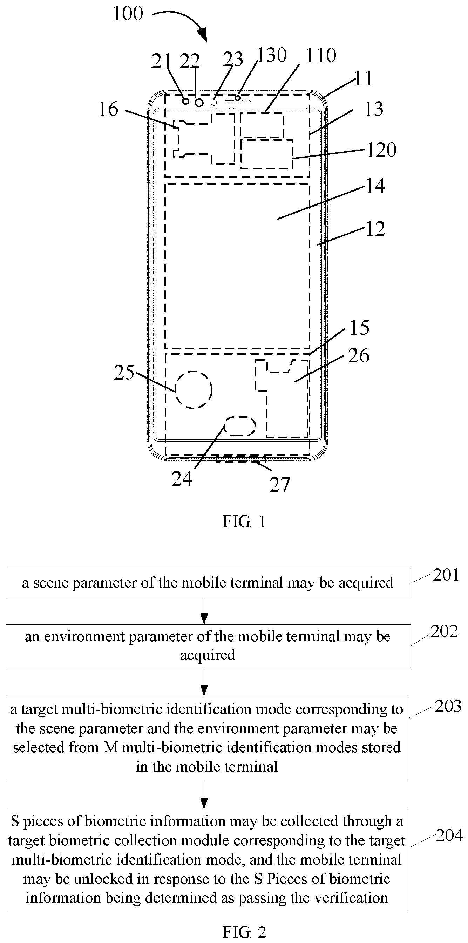

As shown in FIG. 1, a structural schematic view of a mobile terminal according to an embodiment of the present disclosure is provided. The mobile terminal 100 may include: a shell 11, a touch screen 12, a main board 13, a battery 14, and a sub-plate 15. The main board 13 is arranged with an infrared light source 21, an infrared camera 22, a front camera 23, a processor 110, a non-transitory memory 120, an environment sensor 130, a card tray 16 for a subscriber identity module (SIM) and the like. The sub-plate 15 is arranged with an oscillator 25, an integral acoustic chamber 26, a VOOC fast charging interface 27, and a fingerprint sensor module 24. The infrared light source 21 and the infrared camera 22 may serve as the iris collection module for the mobile terminal 100. The front camera 23 may serve as the face collection module for the mobile terminal 100. The fingerprint sensor module 24 may serve as the fingerprint collection module for the mobile terminal 100. The biometric collection apparatus of the mobile terminal 100 may include collection modules such as the iris collection module, the face collection module, the fingerprint collection module, and the like. The biometric collection apparatus is not limited herein.

When the biometric collection apparatus is the iris collection module, the infrared light source 21 may be configured to emit infrared light to irradiate an iris of a user, and the light may be reflected. The infrared camera 22 may be configured to collect the reflected light to generate an iris image. The processor 110 may obtain the iris image, and then process the iris image including operations of evaluating quality of the iris image, iris locating (including rough locating and accurate locating), pre-processing of the iris, collection of feature points of the iris, generation of an iris template, and the like. The generated iris template may be the biometric information as mentioned above.

The mobile terminal 100 described in FIG. 1 may perform following operations.

According to the present embodiment, the environment sensor 130 may be configured to acquire an environment parameter of the mobile terminal 100.

The environment parameter may include at least one selected from the group consisting of: light intensity, a temperature, humidity, electromagnetic interference, a geographic location, and a distance between a user and the mobile terminal 100. The present embodiment does not limit the environment parameter. With different environment parameters, the biometric collection apparatus may require different performance parameters. For example, the face collection module may require high intensity of light, and higher pixels of a camera, higher accuracy of the recognition. Moisturization of a finger may impact the fingerprint collection module collecting a fingerprint image.

In the present embodiment, the non-transitory memory 120 may be configured to store M multi-biometric identification modes. M is an integer greater than 1.

Each biometric collection apparatus may correspond to a biometric identification mode. Permutation and combination may be performed to the biometric collection apparatus arranged in the mobile terminal 100 to obtain M multi-biometric identification modes. For example, when a sequence of the iris collection module, the face collection module, and the fingerprint collection module is not required, biometric identification modes may include an iris identification mode, a face identification mode, and a fingerprint identification mode, and further include another 4 multi-biometric identification modes. When the sequence of the iris collection module, the face collection module, and the fingerprint collection module is required, 12 multi-biometric identification modes may be included.

According to some embodiments, the processor 110 may further be configured to acquire a scene parameter of the mobile terminal 100, and to select a target multi-biometric identification mode corresponding to the scene parameter and the environment parameter from the M multi-biometric identification modes.

The processor 110 may acquire the scene parameter based on page information of a current application or an application invoked in a background of the mobile terminal 100, such that an application scenario of the mobile terminal 100 may be identified. The scene parameter may include at least one selected from the group consisting of: a type of the application, occupancy of network speed, data transmission, and a type of the data. To be noted that, the application scenario corresponding to the scene parameter may be a scenario of unlocking a screen of the mobile terminal, a scenario of payment unlocking, a scenario of unlocking to log on an account, and the like. The present embodiment does not limit the scene parameter.

To be exemplary, the mobile terminal 100 may acquire a state switching referring to a state of screen-off switched to a state of screen-on. The touch screen 12 may detect that a touch operation is performed to the fingerprint sensor module 24, and the application scenario may be determined to be unlocking the screen. In response to the mobile terminal 100 detecting that a scanning function is activated or a payment page is shown, the application scenario may be determined to be payment unlocking. In response to the mobile terminal 100 detecting that the user is on a page of initiating an application, the application scenario may be determined to be unlocking to log on an account.

To be noted that, with different scene parameters, the biometric collection apparatus may require different performance parameters. The performance parameter comprises time consumed for verification, a matching score, power consumption. For example, the scenario of unlocking to activate the mobile terminal may tend to require faster verification, and a scenario of paying may tend to require a high matching score.

The target multi-biometric identification mode may be a combination of various biometric identification modes or an individual mode of biometric identification.

To be exemplary, in response to the light intensity being less than a predefined value, the target multi-biometric identification mode may include the fingerprint identification mode but exclude the iris identification mode, the face identification mode, and any other biometric identification mode depending on the light intensity. In response to payment amount exceeding a predefined value, and in response to a finger of the user getting a cocoon, the target multi-biometric identification mode may include the iris identification mode and other biometric identification modes having a higher level of security, but exclude the fingerprint identification mode.

In an embodiment, the non-transitory memory 120 may further configured to store a verification history. When the processor 110 is configured to select the target multi-biometric identification mode corresponding to the scene parameter and the environment parameter from the M multi-biometric identification modes, the processor 110 may specifically be configured to: acquire L verification records corresponding to the scene parameter and the environment parameter from the verification history; and to select the target multi-biometric identification mode from the M multi-biometric identification modes based on the L verification records.

L is an integer greater than 1. The verification history includes a performance parameter of the mobile terminal during each verification, i.e. time consumed for each verification, a matching score of each verification, power consumption of the biometric collection apparatus for each verification. The present embodiment does not limit a mathematic expression of the performance parameters. The performance parameters may have decimals or may be represented as a percentage. By analyzing the performance parameter included in the verification records obtained from the verification history corresponding to the scene parameter and the environment parameter, the target multi-biometric identification mode may be determined, and biometric information may be collected through the target biometric collection modules corresponding to the target multi-biometric identification mode, instead of invoking all biometric collection apparatus arranged on the mobile terminal 100, such that the power consumption of the mobile terminal 100 may be reduced, and duration of power supply of the mobile terminal 100 may be improved.

In an embodiment, the non-transitory memory 120 may further be configured to store the performance parameter included in each verification record of the verification history and a predefined performance parameter weight corresponding to each performance parameter. When the processor 110 is configured to select the target multi-biometric identification mode from the M multi-biometric identification modes based on the L verification records, the processor is specifically configured to: acquire M evaluation values corresponding to each of the M multi-biometric identification modes based on the performance parameter included in each of the L verification records and the predefined performance parameter weight corresponding to each performance parameter, and select the multi-biometric identification mode corresponding to a maximum of the M evaluation values as the target multi-biometric identification mode.

The present disclosure does not limit a method of calculating the evaluation value. Alternatively, the evaluation value may be equal to the performance parameter multiplied by the corresponded predefined performance parameter weight. A sum of the weight of each performance parameter may be equal to 1. When the performance parameter includes the time consumption for the verification, the matching score, and the power consumption, and when the predefined performance parameter weight of the time consumption is 0.6, the predefined performance parameter weight of the matching score is 0.6, and the predefined performance parameter weight of the power consumption is -0.2, the evaluation value L may be:

$$L = 0.6 * b1 + 0.6 * b2 - 0.2 * b3 \quad (1)$$

In formula (1), $b1$, $b2$, and $b3$ may represent the time consumption, the matching score, and the power consumption, respectively. The present disclosure does not limit the performance parameter and the predefined performance parameter weight.

To be exemplary, the mobile terminal 100 may include three multi-biometric identification modes, i.e., a first multi-biometric identification mode, a second multi-biometric identification mode, and a third multi-biometric identification mode. The first multi-biometric identification mode may include the fingerprint identification mode and the iris identification mode, the second multi-biometric identification mode may include the fingerprint identification mode, the face identification mode, and the iris identification mode, and the third multi-biometric identification mode may include the face identification mode and the iris identification mode. The application scenario corresponding to the scene parameter may be payment unlocking, and the environment parameter may be low intensity of light. There may be 3 verification records corresponding to the scene parameter and the environment parameter. The performance parameter may include the time consumption, the matching score, and the power consumption. The predefined performance parameter weight of the time consumption may be 0.6, the predefined performance parameter of the matching score may be 0.6, and the predefined performance parameter of the power consumption may be -0.2. Table 1 illustrates the performance parameter corresponding to the three multi-biometric identification modes of the 3 verification records. By calculation, the evaluation value corresponding to the first verification record may be 0.5, 0.37, and 0.36, the evaluation value corresponding to the second verification record may be 0.412, 0.468, and 0.308, and the evaluation value corresponding to the third verification record may be 0.624, 0.5, and 0.428. An average evaluation value of each mode may further be calculated. The evaluation value of the first multi-biometric identification mode may be 0.512, the evaluation value of the second multi-biometric identification mode may be 0.479, and the evaluation value of the third multi-biometric identification mode may be 0.365. Therefore, the first multi-biometric identification mode may be selected to be the target multi-biometric identification mode.

Table 1

|  | First multi-biometric identification mode | Second multi-biometric identification mode | Third multi-biometric identification mode |
|---|---|---|---|
| First verification record | Verification time 0.3s, matching score 60%, power consumption 0.2v | Verification time 0.2s, matching score 50%, power consumption 0.25 | Verification time 0.1s, matching score 60%, power consumption 0.3 |
| Second verification record | Verification time 0.2s, matching score 56%, power consumption 0.22v | Verification time 0.2s, matching score 66%, power consumption 0.24 | Verification time 0.1s, matching score 40%, power consumption 0.26 |
| Third verification record | Verification time 0.4s, matching score 70%, power consumption 0.18v | Verification time 0.3s, matching score 60%, power consumption 0.2v | Verification time 0.3s, matching score 50%, power consumption 0.26 |

It may be understood that, based on the performance parameter included in each verification record and the predefined performance parameter weight, the evaluation value of each multi-biometric identification mode may be determined. The target multi-biometric identification mode may be selected based on the evaluation value. In such a way, identification rate of the verification through the multi-biometric identification mode may be improved.

In an embodiment, when the processor 110 is configured to acquire L verification records corresponding to the scene parameter and the environment parameter from the verification history, the processor 110 may specifically be configured to: acquire N biometric identification modes based on the scene parameter and the environment parameter; select R multi-biometric identification modes established from the N biometric identification modes from the M multi-biometric identification modes; and acquire the L verification records corresponding to the R multi-biometric identification modes from the verification history.

N may be an integer greater than or equal to 1, and R may be a positive integer less than M. In other words, N biometric identification modes corresponding to the scene parameter and the environment parameter may be selected from all biometric identification modes corresponding to all biometric collection apparatus arranged in the mobile terminal 100 at first, and then the verification records corresponding to the N biometric identification modes may be acquired. In such a way, a computing burden of the mobile terminal 100 may be reduced, improving the duration of power supply to the mobile terminal.

For example, in response to the light intensity being less than a predefined value, the N biometric identification modes may include the fingerprint identification mode, but exclude the iris identification mode, the face identification mode, or other biometric identification modes depending on the light intensity. In response to payment amount exceeding a predefined value, and in response to a finger of the user getting a cocoon, the N biometric identification modes may include the iris identification mode and other biometric identification modes having a higher level of security, but exclude the fingerprint identification mode.

According to the present embodiment, the biometric collection module corresponding to the target multi-biometric identification mode is a target biometric collection module, the target biometric collection module may be configured to collect S pieces of biometric information, and the processor 110 may be configured to unlock the mobile terminal in response to the S pieces of biometric information being determined as passing the verification.

S may be an integer greater than or equal to 1. As the target multi-biometric identification mode may include at least one biometric identification mode, the corresponded target biometric collection module may include at least one biometric collection module. Therefore, each biometric collection module may collect one piece of biometric information, such that S pieces of biometric information may be obtained.

It may be understood that, in the present embodiment, the environment sensor 130 may acquire the environment parameter of the mobile terminal 100. The processor 110 may acquire the scene parameter of the mobile terminal 100. The target multi-biometric identification mode corresponding to the scene parameter and the environment parameter may be selected from the M multi-biometric identification modes stored in the non-transitory memory 120. In such a way, S pieces of biometric information may be collected through the target biometric collection module corresponding to the target multi-biometric identification mode, instead of invoking all biometric collection modules arranged in the mobile terminal 100. In such a way, the power consumption of the mobile terminal 100 may be saved, and the duration of power supply to the mobile terminal may be improved. Further, in response to the biometric information being collected based on the environment parameter and the scene parameter of the mobile terminal 100, and in response to the S pieces of biometric information being determined as passing the verification, the unlocking may be executed, such that a success rate and security of the unlocking may be improved.

In an embodiment, in response to one of the S pieces of biometric information failing in the verification, the processor 110 may further be configured to select an alternative multi-biometric identification mode from M-1 multi-biometric identification modes. The M-1 multi-biometric identification modes may be obtained by eliminating the target multi-biometric identification mode from the M multi-biometric identification modes.

In other words, in response to the S pieces of biometric information including one piece of biometric information failed in the verification, the processor 110 may select an alternative multi-biometric identification mode from M-1 multi-biometric identification modes. The M-1 multi-biometric identification modes may be obtained by eliminating the target multi-biometric identification mode from the M multi-biometric identification modes. The biometric information may be collected through an alternative biometric collection module corresponding to the alternative multi-biometric identification mode, instead of the target biometric collection module corresponding to the former target multi-biometric identification mode, such that a convenience and flexible operation may be achieved.

To be exemplary, the user may meet some unexpected circumstances, such as hands getting dirty, wearing eye contacts, or having a facial injury, such that the mobile terminal 100 may detect the biometric information collected by the target biometric collection module fails to match the predefined biometric information. The alternative biometric collection module may be selected to collect biometric information to improve an efficiency of verification.

In the present embodiment, the alternative multi-biometric identification mode may be a multi-biometric identification mode selected from the M multi-biometric identification modes with the target multi-biometric identification mode eliminated. Alternatively, the alternative multi-biometric identification mode may be a multi-biometric identification mode specified by the user to be used in response to collection failing or the verification failing. Alternatively, the alternative multi-biometric identification mode may be a multi-biometric identification mode selected by the processor 110 based on multi-biometric identification modes selected or deleted by the user, or based on multi-biometric identification modes included in the target biometric collection apparatus, or based on a failed collection or a failed verification.

Alternatively, when the processor 110 is configured to select an alternative multi-biometric identification mode from M-1 multi-biometric identification modes obtained by eliminating the target multi-biometric identification mode from the M multi-biometric identification modes, the processor 110 may specifically be configured to: select K multi-biometric identification modes excluding a reference biometric identification mode from the M-1 multi-biometric identification modes, the reference biometric identification mode may correspond to the one piece of biometric information failed in the verification; and select the multi-biometric identification mode corresponding to the scene parameter and the environment parameter from the K multi-biometric identification modes as the alternative multi-biometric identification mode.

K may be a positive integer smaller than or equal to M-1.

To be exemplary, the mobile terminal 100 may include three multi-biometric identification modes, and the three multi-biometric identification modes are a first multi-biometric identification mode, a second multi-biometric identification mode, and a third multi-biometric identification mode. The first multi-biometric identification mode may include the fingerprint identification mode and the iris identification mode. The second multi-biometric identification mode may include the fingerprint identification mode, the face identification mode, and the iris identification mode. The third multi-biometric identification mode may include the face identification mode and the iris identification mode. The scene parameter may correspond to the application scenario of payment unlocking, and the environment parameter may be low intensity of light. The first multi-biometric identification mode may be selected to be the target multi-biometric identification mode. When a finger of the user is sweaty, the biometric information collected by the fingerprint collection module corresponding to the first multi-biometric identification mode fails to match the predefined biometric information. The reference biometric identification mode may be the fingerprint identification mode. Any multi-biometric identification mode excluding the reference biometric identification mode may be selected from the remaining 2 multi-biometric identification modes to be the alternative multi-biometric identification mode. The third multi-biometric identification mode may be the only multi-biometric identification mode meeting the above conditions, meaning the third multi-biometric identification mode may be selected to be the alternative multi-biometric identification mode.

The operation of selecting the alternative multi-biometric identification mode from the K multi-biometric identification modes based on the scene parameter and the environment parameter may refer to the method as described in the above. For example, the evaluation value of each of the K multi-biometric identification modes may be acquired, such that K evaluation values may be acquired, and the multi-biometric identification mode corresponding to a maximum of the K evaluation values may be selected to be the alternative multi-biometric identification mode.

Alternatively, the processor 110 may further be configured to: receive an instruction to deactivate a specified biometric identification mode; select any biometric identification mode excluding the biometric identification mode specified to be deactivated by the instruction from the M-1 multi-biometric identification modes, obtaining Q multi-biometric identification modes; and acquire Q evaluation values corresponding to the Q multi-biometric identification modes, and select the multi-biometric identification mode corresponding to a maximum of the Q evaluation values to be the alternative multi-biometric identification mode.

Q may be a positive integer smaller than or equal to M-1. In other words, Q multi-biometric identification modes may exclude the biometric identification mode specified to be deactivated by the instruction and may be selected from the M-1 multi-biometric identification modes. Further, the alternative multi-biometric identification mode may be determined based on the Q evaluation values corresponding to the Q multi-biometric identification modes. In such a way, accuracy of determining the alternative multi-biometric identification mode may be improved.

To be exemplary, the mobile terminal 100 may include three multi-biometric identification modes, i.e., a first multi-biometric identification mode, a second multi-biometric identification mode, and a third multi-biometric identification mode. The first multi-biometric identification mode may include the fingerprint identification mode and the iris identification mode. The second multi-biometric identification mode may include the fingerprint identification mode, the face identification mode, and the iris identification mode. The third multi-biometric identification mode may include the face identification mode and the iris identification mode. The scene parameter may correspond to the application scenario of payment unlocking, and the environment parameter may be low intensity of light. The first multi-biometric identification mode may be selected to be the target multi-biometric identification mode. When a finger of the user is sweaty, the biometric information collected by the fingerprint collection module corresponding to the first multi-biometric identification mode fails to match the predefined biometric information. The user may send the instruction of deactivating a specified biometric identification mode to specify deactivation of the fingerprint identification mode. The multi-biometric identification mode excluding the fingerprint identification mode may be selected from the remaining 2 multi-biometric identification modes to be the alternative multi-biometric identification mode. That is, biometric features may be collected through the third multi-biometric identification mode.

Alternatively, the non-transitory memory 120 may further be configured to store a verification threshold. In response to the S pieces of biometric information including at least one piece of biometric information failed in verification and at least one piece of biometric information passed the verification, the processor 110 may further be configured to acquire a target security factor corresponding to the at least one piece of biometric information. The at least one piece of biometric information may pass the verification. Further, in response to the target security factor being greater than the verification threshold, the processor 110 may further be configured to determine that the S pieces of biometric information pass the verification.

The present disclosure does not limit a method of acquiring the target security factor.

Alternatively, when the processor 110 is configured to acquire the target security factor corresponding to the at least one piece of biometric information passed the verification, the processor 110 is specifically configured to: acquire at least one reference biometric mode corresponding to each of the at least one piece of biometric information passed the verification; acquire a success rate of each of the at least one reference biometric mode and the scene parameter and the environment parameter; and acquire the target security factor based on each success rate.

The reference biometric mode may correspond to a biometric collection module collecting the biometric information passed the verification, and the biometric collection module collecting the biometric information passed the verification may correspond to the target multi-biometric identification mode.

The processor may acquire L verification records corresponding to the scene parameter and the environment parameter and involving the reference biometric mode. Based on the L verification records, the number of successful unlocking corresponding to the reference biometric mode may be acquired, and the unlocking success rate may be determined based on the number of successful unlocking and the total number of verification performed by the reference biometric mode.

The target security factor may be a sum of all unlocking success rates, or may be a mean of all unlocking success rates, and will not be limited herein.

It may be understood that, at least one reference biometric mode for unlocking verification may be determined at first, and then the unlocking success rate corresponding to each of the at least one reference biometric mode under a current environment parameter and a current scene parameter may be determined. The target security factor may further be acquired based on each unlocking success rate. In such a way, under the current environment parameter and the current scene parameter, the unlocking success rate corresponding to the reference biometric mode may be determined, thereby improving accuracy of determining whether the target security factor satisfies a predefined condition, i.e., whether the target security factor is greater than the predefined verification threshold.

In an embodiment, the verification threshold may be set to determine whether the S pieces of biometric information pass the verification. In other words, in response to the S pieces of biometric information including a piece of biometric information which fails in verification, and a piece of biometric information which passes the verification, the mobile terminal may acquire the target security factor corresponding to at least one piece of biometric information which passes the verification. In response to the target security factor being greater than the verification threshold, it may be determined that the S pieces of biometric information pass the verification. Otherwise, alternative multi-biometric identification mode may be selected, and the biometric information may be reacquired, improving the flexibility of unlocking and ensuring an easy operation.

As shown in FIG. 2, a flow chart illustrating a method of unlocking control according to an embodiment of the present disclosure may be provided and adapted to the mobile terminal shown in FIG. 1. The method of unlocking control may include following operations.

At block 201, a scene parameter of the mobile terminal is acquired

At block 202, an environment parameter of the mobile terminal is acquired.

At block 203, a target multi-biometric identification mode corresponding to the scene parameter and the environment parameter is selected from M multi-biometric identification modes stored in the mobile terminal.

M is an integer greater than 1.

In an embodiment, any verification record corresponding to the scene parameter and the environment parameter may be acquired from a verification history to obtain L verification records, and the target multi-biometric identification mode may be selected from the M multi-biometric identification modes based on the L verification records.

L may be an integer greater than 1. The verification history includes a performance parameter of the mobile terminal during each verification, i.e. time consumed for each verification, a matching score of biometric information for each verification, power consumption of a selected biometric collection apparatus. The present disclosure does not limit a mathematic expression of the performance parameter, the performance parameter may have a decimal, or may be represented by a percentage. By analyzing the performance parameter included in the above-mentioned verification records corresponding to the scene parameter and the environment parameter obtained from the verification history, the target multi-biometric identification mode may be determined, and the biometric information may be collected through a target biometric collection module corresponding to the target multi-biometric identification mode, instead of invoking all biometric collection apparatus arranged on the mobile terminal. In such a way, the power consumption of the mobile terminal may be saved, and the duration of power supply to the mobile terminal may be improved.

In an embodiment, selecting the target multi-biometric identification mode from the M multi-biometric identification modes based on the L verification records may include: acquiring M evaluation values corresponding to each of the M multi-biometric identification modes based on the performance parameter included in each of the L verification records and a predefined performance parameter weight corresponding to each performance parameter; and selecting the multi-biometric identification mode corresponding to a maximum of the M evaluation values to be the target multi-biometric identification mode.

The present disclosure does not limit a method of calculating the evaluation value. Alternatively, the evaluation value may be equal to the performance parameter multiplied by the corresponded performance parameter weight. A sum of the weight may be equal to 1.

It may be understood that, the evaluation value corresponding to each multi-biometric identification mode may be determined based on the performance parameter included in each verification records and the predefined performance parameter weight, and the target multi-biometric identification mode may be selected based on the evaluation value, improving the identification rate of the verification performed through the target multi-biometric identification mode.

In an embodiment, acquiring any verification record corresponding to the scene parameter and the environment parameter from the verification history to obtain L verification records may include: acquiring N biometric identification modes based on the scene parameter and the environment parameter; selecting R multi-biometric identification modes from the M multi-biometric identification modes; and acquiring the L verification records corresponding to the R multi-biometric identification modes from the verification history. The R multi-biometric identification modes may be established from the N biometric identification modes acquired, N may be an integer greater than 1, and R may be a positive integer less than M.

N may be a positive integer greater than or equal to 1, and R may be a positive integer less than M. In other words, the N biometric identification modes corresponding to the scene parameter and the environment parameter may be selected from all biometric identification modes corresponding to all biometric collection apparatus arranged on the mobile terminal at first; and then any verification record corresponding to the N biometric identification mode may be acquired. In such a way, a computing burden of the mobile terminal may be reduced, and the duration of power supply to the mobile terminal may be improved.

At block 204, S pieces of biometric information may be collected through a target biometric collection module corresponding to the target multi-biometric identification mode, and the mobile terminal may be unlocked in response to the S pieces of biometric information passing the verification.

S may be an integer greater than or equal to 1

Alternatively, the method may further include: selecting an alternative multi-biometric identification mode from M-1 multi-biometric identification modes in response to the S pieces of biometric information including at least one piece of biometric information failed in verification. The M-1 multi-biometric identification modes may be the M multi-biometric identification modes with the target multi-biometric identification mode eliminated.

In other words, in response to the S pieces of biometric information including one piece of biometric information failed in verification, the processor may select the alternative multi-biometric identification mode from the M-1 multi-biometric identification modes. The M-1 multi-biometric identification modes may be the M multi-biometric identification mode with the target multi-biometric identification mode eliminated. The biometric information may be collected through an alternative biometric collection module corresponding to the alternative multi-biometric identification mode instead of the target biometric collection module corresponding to the target multi-biometric identification mode. An easy and flexible operation may be achieved.

In an embodiment, selecting the alternative multi-biometric identification mode from the M-1 multi-biometric identification modes may include: select K multi-biometric identification modes excluding the multi-biometric identification module corresponding to the biometric information failed in the verification from the M-1 multi-biometric identification modes; and select the multi-biometric identification mode corresponding to the scene parameter and the environment parameter from the K multi-biometric identification modes to be the alternative multi-biometric identification mode. The M-1 multi-biometric identification modes may be the M multi-biometric identification modes with the target multi-biometric identification mode eliminated.

K may be a positive integer less than or equal to M-1.

Alternatively, the method may further include: receiving an instruction of deactivating a specified biometric identification mode; selecting any biometric identification mode excluding the biometric identification mode specified to be deactivated by the instruction from the M-1 multi-biometric identification modes to obtain Q multi-biometric identification modes; and acquiring Q evaluation values corresponding to the Q multi-biometric identification modes, and selecting the multi-biometric identification mode corresponding to a maximum of the Q evaluation values to be the alternative multi-biometric identification mode.

Q may be a positive integer less than or equal to M-1. In other words, Q multi-biometric identification modes may exclude the biometric identification mode specified to be deactivated by the instruction and may be selected from the M-1 multi-biometric identification modes. Further, the alternative multi-biometric identification mode may be determined based on the Q evaluation values corresponding to the Q multi-biometric identification modes. In such a way, accuracy of determining the alternative multi-biometric identification mode may be improved.

Alternatively, the method may further include: in response to the S pieces of biometric information including at least one piece of biometric information which fails in the verification, and at least one piece of biometric information which passes the verification, acquiring a target security factor corresponding to the at least one piece of biometric information which passes the verification; and determining that the S pieces of biometric information pass the verification in response to the target security factor being greater than a verification threshold.

It may be understood that, in response to the S pieces of biometric information including a piece of biometric information failed in the verification and a piece of biometric information passed the verification, the target security factor corresponding to at least one piece of biometric information may be acquired, and the at least one piece of biometric information may pass the verification. It may be determined that the S pieces of biometric information pass the verification in response to the target security factor being greater than the verification threshold. Otherwise, the alternative multi-biometric identification mode may be selected, and the biometric information may be re-collected, such that the flexibility of unlocking may be improved, and an easy operation may be achieved. In an example, acquiring the target security factor corresponding to the at least one piece of biometric information passed the verification may include: acquiring at least one reference biometric mode corresponding to each of the at least one piece of biometric information passed the verification; acquiring an unlocking success rate of each of the at least one reference biometric mode corresponding to the scene parameter and the environment parameter; and acquiring the target security factor based on each unlocking success rates.

It may be understood that, at least one reference biometric mode for unlocking verification may be determined at first, then the unlocking success rate corresponding to each of the at least one reference biometric mode under a current scene parameter and a current environment parameter may be determined, and further, the target security factor may be acquired based on each unlocking success rate. In such a way, the unlocking success rate corresponding to the reference biometric mode under the current scene parameter and the current environment parameter may be determined, improving accuracy of determining whether the target security factor satisfies a predefined condition, that is, whether the target security factor is greater than the predefined verification threshold.

According to the method of unlocking control shown in FIG. 2, the scene parameter and the environment parameter of the mobile terminal may be acquired, and the target multi-biometric identification mode corresponding to the scene parameter and the environment parameter may be selected from the M multi-biometric identification modes stored in the mobile terminal, such that the S pieces of biometric information may be collected through the target biometric collection module corresponding to the target multi-biometric identification mode, instead of invoking all biometric collection apparatus arranged on the mobile terminal. In such a way, the power consumption of the mobile terminal may be saved, and the duration of the power supply of the mobile terminal may be improved. Further, the biometric information may be collected based on the scene parameter and the environment parameter of the mobile terminal, and the mobile terminal may be unlocked in response to the S pieces of biometric information passing the verification, therefore, the success rate and security of unlocking may be improved.

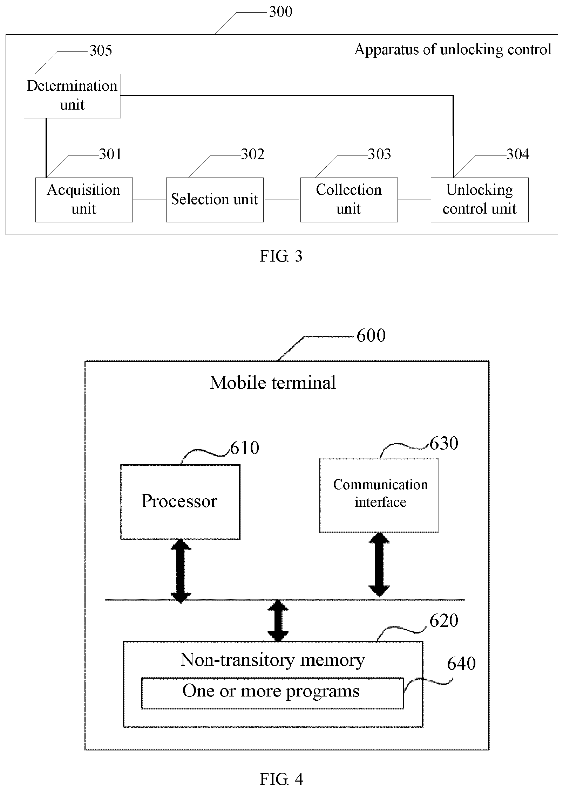

As shown in FIG. 3, a structural diagram of an apparatus for unlocking control according to an embodiment of the present disclosure may be provided. According to FIG. 3, the apparatus for unlocking control may include following units.

An acquisition unit 301 may be included and configured to acquire the scene parameter and the environment parameter of the mobile terminal.

A selection unit 301 is included and configured to select a target multi-biometric identification mode corresponding to the scene parameter and the environment parameter from M multi-biometric identification modes stored in the mobile terminal. M is an integer greater than 1.

A collection unit 303 is included and configured to collect S pieces of biometric information. S may be an integer greater than 1.

An unlocking unit 304 is included and configured to unlock the mobile terminal in response to the S pieces of biometric information passing the verification.

In an embodiment, when the target multi-biometric identification mode corresponding to the scene parameter and the environment parameter is selected from the M multi-biometric identification modes stored in the mobile terminal, the acquisition unit 301 may further be configured to acquire L verification records corresponding to the scene parameter and the environment parameter from a verification history; and the selection unit 302 may specifically be configured to select the target multi-biometric identification mode from the M multi-biometric identification modes based on the L verification records. L may be an integer greater than 1.

In an embodiment, when the target multi-biometric identification mode is selected from the M multi-biometric identification modes based on the L verification records, the acquisition unit 301 may further be configured to acquire an evaluation value corresponding to each of the M multi-biometric identification modes based on the performance parameter included in each of the L verification records and a predefined performance parameter weight corresponding to each performance parameter, obtaining M evaluation values; and the selection unit 302 may specifically be configured to select the multi-biometric identification mode corresponding to a maximum of the M evaluation values to be the target multi-biometric identification mode.

In an embodiment, when the verification records corresponding to the scene parameter and the environment parameter are acquired from the verification history to obtain the L verification records, the acquisition unit 301 may specifically be configured to: acquire N biometric identification modes based on the scene parameter and the environment parameter; acquire R multi-biometric identification modes established by the N biometric identification modes from the M multi-biometric identification modes; and acquire the L verification records corresponding to the R multi-biometric identification modes from the verification history. N may be an integer greater than 1, and R may be a positive integer less than M.

In an embodiment, the selection unit 302 may further be configured to select an alternative biometric identification mode from M-1 multi-biometric identification mode in response to S pieces of biometric information including at least one piece of biometric information failed in the verification. The M-1 multi-biometric identification modes may be the M multi-biometric identification modes with the target multi-biometric identification mode eliminated.

In an embodiment, when the alternative multi-biometric identification mode is selected from the M-1 multi-biometric identification modes, the selection unit 302 may specifically be configured to: select K multi-biometric identification modes excluding the multi-biometric identification module corresponding to the biometric information failed in the verification from the M-1 multi-biometric identification modes; and select the multi-biometric identification mode corresponding to the scene parameter and the environment parameter from the K multi-biometric identification modes to be the alternative multi-biometric identification mode. The M-1 multi-biometric identification modes may be the M multi-biometric identification modes with the target multi-biometric identification mode eliminated, and K may be a positive integer less than M-1.

In an embodiment, in response to the S pieces of biometric information including at least one piece of biometric information which fails in the verification, and at least one piece of biometric information which passes the verification, the acquisition unit 301 may further be configured to acquire the target security factor corresponding to the at least one piece of biometric information which passes the verification.

The apparatus for unlocking control 300 may further include a determination unit 305, configured to determine that the S pieces of biometric information pass the verification in response to a target security factor being greater than a verification threshold.

In an embodiment, when the target security factor corresponding to the at least one piece of biometric information passed the verification is acquired, the acquisition unit 301 may specifically be configured to: acquire at least one reference biometric mode corresponding to each of the at least one piece of biometric information passed the verification; acquire an unlocking success rate of the at least one reference biometric mode corresponding to the scene parameter and the environment parameter; and acquire the target security factor based on each success rate.

According to the apparatus for unlocking control shown in FIG. 3, the scene parameter and the environment parameter of the mobile terminal may be acquired, and the target multi-biometric identification mode corresponding to the scene parameter and the environment parameter may be selected from the M multi-biometric identification modes stored in the mobile terminal. Therefore, the S pieces of biometric information may be collected through the target biometric collection module corresponding to the target multi-biometric identification mode, instead of invoking all biometric collection apparatus arranged on the mobile terminal, such that the power consumption of the mobile terminal may be saved, and the duration of power supply to the mobile terminal may be improved. Further, the biometric information may be collected based on the scene parameter and the environment parameter of the mobile terminal, and the mobile terminal may be unlocked in response to the S pieces of biometric information being determined as passing the verification, such that the success rate and security of unlocking may be improved.

In accordance with the embodiments shown in FIG. 2 and FIG. 3, FIG. 4 shows a structural diagram of another mobile terminal according to an embodiment of the present disclosure. As shown in FIG. 4, the mobile terminal 600 may include a processor 610, a non-transitory memory 620, a communication interface 630, and one or more programs 640. The one or more programs 640 may be stored in the non-transitory memory 620, and may be configured to be executed by the processor 610. The one or more programs 640 may include instructions for executing following operations.

A scene parameter of the mobile terminal is acquired.

An environment parameter of the mobile terminal is acquired.

A target multi-biometric identification mode corresponding to the scene parameter and the environment parameter is selected from M multi-biometric identification modes stored in the mobile terminal. M is an integer greater than 1.

S pieces of biometric information may be collected through a target biometric collection module corresponding to the target multi-biometric identification mode, and the mobile terminal may be unlocked in response to the S pieces of biometric information being determined as passing the verification. S may be an integer greater than 1.

It may be shown that, in the present embodiment, the scene parameter and the environment parameter of the mobile terminal may be acquired, and the target multi-biometric identification mode corresponding to the scene parameter and the environment parameter may be selected from the M multi-biometric identification modes stored in the mobile terminal. Therefore, the S pieces of biometric information may be collected through the target biometric collection module corresponding to the target multi-biometric identification mode, instead of invoking all biometric collection apparatus arranged on the mobile terminal. In such a way, the power consumption of the mobile terminal may be saved, and the duration of power supply to the mobile terminal may be improved. Further, the biometric information may be collected based on the scene parameter and the environment parameter, and the mobile terminal may be unlocked in response to the S pieces of biometric information being determined as passing the verification, such that the success rate and security of unlocking may be improved.

In an embodiment, when the target multi-biometric identification mode corresponding to the scene parameter and the environment parameter is selected from the M multi-biometric identification modes stored in the mobile terminal, the one or more programs 640 may include an instruction to perform following operations.

Any verification record corresponding to the scene parameter and the environment parameter may be acquired from a verification history, obtaining L verification records. L may be an integer greater than 1.

The target multi-biometric identification mode may be selected from the M multi-biometric identification modes based on the L verification records.

In an embodiment, when the target multi-biometric identification mode is selected from the M multi-biometric identification modes based on the L verification records, the one or more programs 640 may include an instruction to perform following operations.

An evaluation value corresponding to each of the M multi-biometric identification modes may be acquired based on a performance parameter included in each of the L verification records and a predefined performance parameter weight corresponding to each performance parameter to obtain M evaluation values.

The multi-biometric identification mode corresponding to a maximum of the M evaluation values may be selected to be the target multi-biometric identification mode.

In an embodiment, when any verification record corresponding to the scene parameter and the environment parameter is acquired from the verification history to obtain L verification records, the one or more programs 640 may include an instruction to perform following operations.

N biometric identification modes may be acquired based on the scene parameter and the environment parameter. N may be an integer greater than or equal to 1.

R multi-biometric identification modes may be acquired from the M multi-biometric identification modes. The R multi-biometric identification modes may be established from the N biometric identification modes, and the R may be a positive integer less than M.

The L verification records corresponding to the R multi-biometric identification modes may be acquired from the verification history.

In an embodiment, the one or more programs 640 may include an instruction to perform following operations.

In response to the S pieces of biometric information including at least one piece of biometric information failed in the verification, an alternative multi-biometric identification mode may be selected from M-1 multi-biometric identification modes, and the M-1 multi-biometric identification modes may be the M multi-biometric identification modes with the target multi-biometric identification mode eliminated.

In an embodiment, when the alternative multi-biometric identification mode is selected from the M-1 multi-biometric identification modes, and the M-1 multi-biometric identification modes are the M multi-biometric identification modes with the target multi-biometric identification mode eliminated, the one or more programs may further include an instruction to perform following operations.

The multi-biometric identification mode excluding the multi-biometric identification mode corresponding to the biometric information failed in the verification may be selected from the M-1 multi-biometric identification modes to obtain K multi-biometric identification modes. The M-1 multi-biometric identification modes may be the M multi-biometric identification modes with the target multi-biometric identification mode eliminated, and K may be a positive integer less than M-1.

The multi-biometric identification mode corresponding to the scene parameter and the environment parameter may be selected from the K multi-biometric identification modes to be the alternative multi-biometric identification mode.

In an embodiment, the one or more programs 640 may further include an instruction to perform following operations.

In response to the S pieces of biometric information including at least one piece of biometric information failed in the verification and at least one piece of biometric information passed the verification, a target security factor corresponding to the at least one piece of biometric information passed the verification may be acquired.

In response to the target security factor being greater than a verification threshold, the S pieces of biometric information may be determined as passing the verification.

In an embodiment, when the target security factor corresponding to the at least one piece of biometric information passed the verification is acquired, the one or more programs 640 may include an instruction to perform following instructions.

At least one reference biometric mode corresponding to each of the at least one piece of biometric information passed the verification may be acquired.

An unlocking success rate of each reference biometric mode corresponding to the scene parameter and the environment parameter may be acquired.

The target security factor may be acquired based on each unlocking success rate.

A computer non-transitory storage medium may be provided according to an embodiment of the present disclosure. The computer non-transitory storage medium may be configured to store a computer program. The computer program may enable the computer to perform some or all of the operations as described in the above-mentioned embodiments. The computer may include a mobile terminal.

A computer programmatic product may be provided according to an embodiment of the present disclosure. The computer programmatic product may include a computer-readable non-transitory storage medium having a computer program stored therein. The computer program may be executed to allow the computer to perform some of all of the operations as described in the above-mentioned embodiments. The computer programmatic product may be a software package, and the computer may include a mobile terminal.

To be noted that, in the above-mentioned embodiments illustrating the method of unlocking control, for the purposes of providing a concise description, the method may be illustrated as combination of a series of operations. However, the skilled in the art shall understand that the present disclosure is not limited by the sequence of describing the series of operations. According to the present disclosure, some operations may be performed in another sequence or at the same time. Further, the skilled in the art shall understand that the embodiments described herein are preferred embodiments, the operations and modules involved herein may not be necessary to the present disclosure.

Descriptions of the above embodiments may emphasize on various aspects. A portion that is not described in details in one of the embodiments may refer to other embodiments having relative descriptions.

In some embodiments of the present disclosure, it should be understood that, the disclosed apparatus may be realized in another form. For example, the apparatus described in the above embodiments may be exemplary. For example, the units may be defined based on logical functions. In an actual scenario, the units may be defined by other means. For example, a plurality of units or assemblies may be combined or integrated into another system, or some features may be omitted or unexecuted. In addition, mutual coupling or direct coupling or communicative connection shown or discussed herein may be achieved through some interfaces. Indirect coupling or communicative connection between the apparatus or units may be electrical or in other forms.

The units described as separate components may or may not be physically separate, and the components shown as units may or may not be physical units. That is, the units may be located in one place, or may be distributed to multiple network units. Some or all of the units may be selected according to actual needs to achieve the purposes of the solutions of the present embodiment.

In addition, each functional unit in each embodiment of the present application may be integrated into one processing unit, or each functional unit may physically separated, or two or more units may be integrated into one unit. The integrated unit can be realized either in hardware or in a form of a software functional unit.

When the integrated unit is realized as a software functional unit and sold or used as an independent product, the integrated unit may be stored in a computer readable non-transitory memory. Based on such understanding, essence of technical solutions of the present disclosure, or a portion of the technical solutions having contribution to the prior art, or all or part of the technical solutions may be realized in a form of a software product, and the software product may be stored in a non-transitory memory. The software product may include a number of instructions to cause a computer device (the computer device may be a personal computer, a server, a network device, and the like) to perform all or part of the operations of the above-mentioned embodiments of the present disclosure. The foregoing non-transitory memory may be a medium able to store programmatic codes, including: a Universal Serial Bus (USB) flash disc, a read-only memory (ROM), a random access memory (RAM), a mobile hard disk, a magnetic disk, or an optical disk, and the like.

The ordinary skilled in the art shall understand that all or part of the operations of the embodiments may be completed by a program to instruct related hardware. The program can be stored in a computer readable non-transitory memory, and the non-transitory memory may include: a flash drive, a read-only memory, a random access memory, a magnetic disk, an optical disk, or the like.

The embodiments of the present application are described in details. The principles and implementations of the present disclosure are described through specific examples. The description of the above embodiments is for the purposes to understand the method and core ideas of the present disclosure.

**Claims**

1. A method of unlocking control performed by a mobile terminal, **characterized by** comprising:

    acquiring (201) a scene parameter of a mobile terminal;
    acquiring (202) an environment parameter of the mobile terminal;
    selecting (203) a target multi-biometric identification mode corresponding to the scene parameter and the environment parameter from M multi-biometric identification modes stored in the mobile terminal, wherein the M is an integer greater than 1, and the scene parameter comprises at least one selected from the group consisting of: a type of the application, occupancy of network speed, data transmission, and a type of the data; and
    collecting (204) S pieces of biometric information through a target biometric collection module corresponding to the target multi-biometric identification mode, and unlocking the mobile terminal in response to the S pieces of biometric information being determined as passing verification, wherein the S is an integer greater than 1, wherein the target multi-biometric identification mode is selected based on a performance parameter recorded in a verification record of a verification history, and the performance parameter comprises time consumed for each verification, a matching score of each verification, and power consumption of a biometric collection apparatus for each verification.

2. The method according to claim 1, wherein the selecting (203) a target multi-biometric identification mode corresponding to the scene parameter and the environment parameter from M multi-biometric identification modes stored in the mobile terminal comprises:

    acquiring L verification records corresponding to the scene parameter and the environment parameter from the verification history, wherein the L is an integer greater than 1; and
    selecting the target multi-biometric identification mode from the M multi-biometric identification modes based on the L verification records.

3. The method according to claim 2, wherein the performance parameter is recorded in the L verification records, and the selecting the target multi-biometric identification mode from the M multi-biometric identification modes based on the L verification records comprises:

    acquiring an evaluation value corresponding to each of the M multi-biometric identification modes based on the performance parameter recorded in each of the L verification records and a predefined weight corresponding to each performance parameter to obtain M evaluation values; and
    selecting the multi-biometric identification mode corresponding to a maximum of the M evaluation values to be the target multi-biometric identification mode.

4. The method according to claim 2 or claim 3, wherein the acquiring L verification records corresponding to the scene parameter and the environment parameter from a verification history comprises:

    acquiring N biometric identification modes based on the scene parameter and the environment parameter, wherein the N is an integer greater than 1;
    acquiring R multi-biometric identification modes from the M multi-biometric identification modes, wherein the R multi-biometric identification modes are established by the N biometric identification modes, and R is a positive integer less than M; and
acquiring the L verification records corresponding to the R multi-biometric identification modes from the verification history.

5. The method according to any one of claims 1 to 4, further comprising:
selecting an alternative multi-biometric identification mode from M-1 multi-biometric identification modes in response to the S pieces of biometric information comprising at least one piece of biometric information failed in the verification, wherein the M-1 multi-biometric identification modes are the M multi-biometric identification modes with the target multi-biometric identification mode eliminated.

6. The method according to claim 5, wherein the selecting an alternative multi-biometric identification mode from M-1 multi-biometric identification modes in response to the S pieces of biometric information comprising at least one piece of biometric information failed in the verification comprises:

selecting K multi-biometric identification modes excluding a reference biometric identification mode from the M-1 multi-biometric identification modes, wherein the K is a positive integer less than M-1 and the reference biometric identification mode corresponds to the one piece of biometric information failed in the verification; and selecting the multi-biometric identification mode corresponding to the scene parameter and the environment parameter from the K multi-biometric identification modes to be the alternative multi-biometric identification mode.

7. The method according to any one of claims 1 to 4, further comprising:

in response to the S pieces of biometric information comprising at least one piece of biometric information which fails in the verification, and at least one piece of biometric information which passes the verification, acquiring a target security factor corresponding to the at least one piece of biometric information which passes the verification; and determining that the S pieces of biometric information pass the verification in response to the target security factor being greater than a verification threshold.

8. The method according to claim 7, wherein the acquiring a target security factor corresponding to the at least one piece of biometric information passed the verification comprises:

acquiring at least one reference biometric mode corresponding to each of the at least one piece of biometric information passed the verification;
acquiring an unlocking success rate of each of the at least one reference biometric mode corresponding to the scene parameter and the environment parameter; and
acquiring the target security factor based on each unlocking success rate.

9. An apparatus for unlocking control, comprising:

an acquisition unit (301), configured to acquire a scene parameter and an environment parameter of a mobile terminal, wherein the scene parameter comprise sat least one selected from the group consisting of: a type of the application, occupancy of network speed, data transmission, and a type of the data;
a selection unit (302), configured to select a target multi-biometric identification mode corresponding to the scene parameter and the environment parameter from M multi-biometric identification modes stored in the mobile terminal, wherein the M is an integer greater than 1;
a collection unit (303), configured to collect S pieces of biometric information, wherein the S is an integer greater than or equal to 1; and
an unlocking unit (304), configured to unlock the mobile terminal in response to the S pieces of biometric information passing verification, wherein the target multi-biometric identification mode is selected based on a performance parameter recorded in a verification record of a verification history, and the performance parameter comprises time consumed for each verification, a matching score of each verification, and power consumption of a biometric collection apparatus for each verification.

10. The apparatus according to claim 9, wherein
the acquisition unit (301) is further configured to acquire L verification records corresponding to the scene parameter and the environment parameter from the verification history, wherein the L is an integer greater than 1; and

the selection unit (302) is further configured to select the target multi-biometric identification mode from the M multi-biometric identification modes based on the L verification records.

11. The apparatus according to claim 10, wherein
the performance parameter is stored in each of the L verification records;
the acquisition unit (301) is further configured to acquire an evaluation value corresponding to each of the M multi-biometric identification modes based on the recorded performance parameter and a predefined weight corresponding to each performance parameter to obtain M evaluation values; and
the selection unit (302) is further configured to select the multi-biometric identification mode corresponding to a maximum of the M evaluation values to be the target multi-biometric identification mode.

12. The apparatus according to claim 10 or 11, wherein the acquisition unit (301) is further configured to acquire N biometric identification modes based on the scene parameter and the environment parameter, wherein the N is an integer greater than 1; acquire R multi-biometric identification modes from the M multi-biometric identification modes, wherein the R multi-biometric identification modes are established by the N biometric identification modes, and R is a positive integer less than M; and acquire the L verification records corresponding to the R multi-biometric identification modes from the verification history.

13. The apparatus according to any one of claims 9 to 12, wherein the selection unit (302) is further configured to select an alternative multi-biometric identification mode from M-1 multi-biometric identification modes in response to the S pieces of biometric information comprising at least one piece of biometric information failed in the verification, wherein the M-1 multi-biometric identification modes are the M multi-biometric identification modes with the target multi-biometric identification mode eliminated.

14. The apparatus according to any one of claims 9 to 13, wherein the selection unit (302) is further configured to select K multi-biometric identification modes excluding a reference biometric identification mode from the M-1 multi-biometric identification modes, wherein the K is a positive integer less than M-1 and the reference biometric identification mode corresponds to the one piece of biometric information failed in the verification; and select the multi-biometric identification mode corresponding to the scene parameter and the environment parameter from the K multi-biometric identification modes to be the alternative multi-biometric identification mode.

15. A mobile terminal (600), comprising a processor (610), a non-transitory memory (620), a communication interface (630), and one or more programs (640), wherein the one or more programs (640) are stored in the non-transitory memory (620) and configured to be executed by the processor (610), and the one or more programs comprise an instruction to execute operations of the method according to any one of claims 1 to 8.

**Patentansprüche**

1. Verfahren zum Entsperren der von einem mobilen Endgerät durchgeführten Steuerung, das **dadurch gekennzeichnet** ist, Folgendes zu umfassen:

Erfassen (201) eines Szenenparameters eines mobilen Endgerätes;
Erfassen (202) eines Umgebungsparameters des mobilen Endgerätes;
Auswählen (203) eines Ziel-Multibiometrie-Identifikationsmodus, der dem Szenenparameter und dem Umgebungsparameter von M Multibiometrie-Identifikationsmodi entspricht, die in dem mobilen Endgerät gespeichert sind,
wobei M eine Ganzzahl größer als 1 ist, und
der Szenenparameter mindestens einen Posten umfasst, der aus der Gruppe ausgewählt wird, die aus Folgendem besteht:

einer Art der Applikation, Belegung der Netzwerkgeschwindigkeit, Datenübertragung und einer Art der Daten; und
Sammeln (204) von S Stücken von Biometrieinformationen durch ein Ziel-Biometrie-Erfassungsmodul, das dem Ziel-Multibiometrie-Identifikationsmodus entspricht, und
Entsperren des mobilen Endgerätes in Reaktion auf die S Stücke von Biometrieinformationen, die als die Überprüfung bestehend bestimmt sind,
wobei S eine Ganzzahl größer als 1 ist,

wobei der Ziel-Multibiometrie-Identifikationsmodus auf der Basis eines Leistungsparameters ausgewählt wird, der in einem Prüfprotokoll einer Prüfhistorie aufgezeichnet ist, und
der Leistungsparameter die für jede Überprüfung verbrauchte Zeit, einen Übereinstimmungswert jeder Überprüfung und den Stromverbrauch einer Biometrie-Erfassungsvorrichtung für jede Überprüfung umfasst.

2. Verfahren gemäß Anspruch 1,
wobei das Auswählen (203) eines Ziel-Multibiometrie-Identifikationsmodus, der dem Szenenparameter und dem Umgebungsparameter von M Multibiometrie-Identifikationsmodi entspricht, die in dem mobilen Endgerät gespeichert sind, Folgendes umfasst:

Erfassen von L Prüfprotokollen, die dem Szenenparameter und dem Umgebungsparameter entsprechen, von der Prüfhistorie,
wobei L eine Ganzzahl größer als 1 ist; und
Auswählen des Ziel-Multibiometrie-Identifikationsmodus von den M Multibiometrie-Identifikationsmodi auf der Basis der L Prüfprotokolle.

3. Verfahren gemäß Anspruch 2,
wobei der Leistungsparameter in den L Prüfprotokollen aufgezeichnet ist, und
das Auswählen des Ziel-Multibiometrie-Identifikationsmodus von den M Multibiometrie-Identifikationsmodi auf der Basis der L Prüfprotokolle Folgendes umfasst:

Erfassen eines Evaluationswertes, der jedem der M Multibiometrie-Identifikationsmodi entspricht, auf der Basis des Leistungsparameters, der in jedem der L Prüfprotokolle aufgezeichnet ist, und eines vordefinierten Gewichts, das jedem Leistungsparameter entspricht, um M Evaluationswerte zu erhalten; und
Auswählen des Multibiometrie-Identifikationsmodus, der einem Maximum der M Evaluationswerte entspricht, als den Ziel-Multibiometrie-Identifikationsmodus.

4. Verfahren gemäß Anspruch 2 oder Anspruch 3,
wobei das Erfassen von L Prüfprotokollen, die dem Szenenparameter und dem Umgebungsparameter entsprechen, von der Prüfhistorie Folgendes umfasst:

Erfassen von N Biometrie-Identifikationsmodi auf der Basis des Szenenparameters und des Umgebungsparameters,
wobei N eine Ganzzahl größer als 1 ist;
Erfassen von R Multibiometrie-Identifikationsmodi von den M Multibiometrie-Identifikationsmodi,
wobei die R Multibiometrie-Identifikationsmodi durch die N Biometrie-Identifikationsmodi festgelegt werden und R eine positive Ganzzahl kleiner als M ist; und
Erfassen der L Prüfprotokolle, die den R Multibiometrie-Identifikationsmodi entsprechen, von der Prüfhistorie.

5. Verfahren gemäß einem der Ansprüche 1 bis 4, ferner Folgendes umfassend:

Auswählen eines alternativen Multibiometrie-Identifikationsmodus von M-1 Multibiometrie-Identifikationsmodi in Reaktion auf die S Stücke von Biometrieinformationen, die mindestens ein Stück von Biometrieinformationen umfassen, das bei der Überprüfung durchgefallen ist,
wobei die M-1 Multibiometrie-Identifikationsmodi die M Multibiometrie-Identifikationsmodi sind, bei denen der Ziel-Multibiometrie-Identifikationsmodus eliminiert wurde.

6. Verfahren gemäß Anspruch 5,
wobei das Auswählen eines alternativen Multibiometrie-Identifikationsmodus von M-1 Multibiometrie-Identifikationsmodi in Reaktion auf die S Stücke von Biometrieinformationen, die mindestens ein Stück von Biometrieinformationen umfassen, das bei der Überprüfung durchgefallen ist, Folgendes umfasst:

Auswählen von K Multibiometrie-Identifikationsmodi unter Ausschluss eines Referenz-Biometrie-Identifikationsmodus von den M-1 Multibiometrie-Identifikationsmodi,
wobei K eine positive Ganzzahl kleiner als M-1 ist und der Referenz-Biometrie-Identifikationsmodus dem einen Stück von Biometrieinformationen entspricht, das bei der Überprüfung durchgefallen ist; und
Auswählen des Multibiometrie-Identifikationsmodus, der dem Szenenparameter und dem Umgebungsparameter entspricht, von den K Multibiometrie-Identifikationsmodi, als den alternativen Multibiometrie-Identifikationsmodus.

7. Verfahren gemäß einem der Ansprüche 1 bis 4, ferner Folgendes umfassend:

in Reaktion auf die S Stücke von Biometrieinformationen, die mindestens ein Stück von Biometrieinformationen umfassen, das bei der Überprüfung durchfällt, und mindestens ein Stück von Biometrieinformationen, das die Überprüfung besteht,

Erfassen eines Ziel-Sicherheitsfaktors, der dem mindestens einen Stück von Biometrieinformationen entspricht, das die Überprüfung besteht; und
Bestimmen, dass die S Stücke von Biometrieinformationen die Überprüfung bestehen, in Reaktion darauf, dass der Ziel-Sicherheitsfaktor größer als eine Überprüfungsschwelle ist.

8. Verfahren gemäß Anspruch 7,
wobei das Erfassen eines Ziel-Sicherheitsfaktors, der dem mindestens einen Stück von Biometrieinformationen entspricht, das die Überprüfung bestand, Folgendes umfasst:

Erfassen von mindestens einem Referenz-Biometriemodus, der jedem des mindestens einen Stücks von Biometrieinformationen entspricht, das die Überprüfung bestand;
Erfassen einer Entsperrungs-Erfolgsquote von jedem des mindestens einen Referenz-Biometriemodus, der dem Szenenparameter und dem Umgebungsparameter entspricht; und
Erfassen des Ziel-Sicherheitsfaktors auf der Basis der jeweiligen Entsperrungs-Erfolgsquote.

9. Vorrichtung zum Entsperren der Steuerung, die Folgendes umfasst:

eine Erfassungseinheit (301), die dazu ausgelegt ist, einen Szenenparameter und einen Umgebungsparameter eines mobilen Endgerätes zu erfassen,
wobei der Szenenparameter mindestens einen Posten umfasst, der aus der Gruppe ausgewählt wird, die aus Folgendem besteht:

einer Art der Applikation,
Belegung der Netzwerkgeschwindigkeit, Datenübertragung und einer Art der Daten;
eine Auswahleinheit (302), die dazu ausgelegt ist, einen Ziel-Multibiometrie-Identifikationsmodus auszuwählen, der dem Szenenparameter und dem Umgebungsparameter von M Multibiometrie-Identifikationsmodi entspricht, die in dem mobilen Endgerät gespeichert sind,
wobei M eine Ganzzahl größer als 1 ist;
eine Sammeleinheit (303), die dazu ausgelegt ist, S Stücke von Biometrieinformationen zu sammeln,
wobei S eine Ganzzahl größer als oder gleich 1 ist; und
eine Entsperrungseinheit (304), die dazu ausgelegt ist, das mobile Endgerät zu entsperren in Reaktion darauf, dass die S Stücke von Biometrieinformationen die Überprüfung bestehen,
wobei der Ziel-Multibiometrie-Identifikationsmodus auf der Basis eines Leistungsparameters ausgewählt wird, der in einem Prüfprotokoll einer Prüfhistorie aufgezeichnet ist, und
der Leistungsparameter die für jede Überprüfung verbrauchte Zeit, einen Übereinstimmungswert jeder Überprüfung und den Stromverbrauch einer Biometrie-Erfassungsvorrichtung für jede Überprüfung umfasst.

10. Vorrichtung gemäß Anspruch 9,
wobei die Erfassungseinheit (301) ferner dazu ausgelegt ist, L Prüfprotokolle, die dem Szenenparameter und dem Umgebungsparameter entsprechen, von der Prüfhistorie zu erfassen,
wobei L eine Ganzzahl größer als 1 ist; und
die Auswahleinheit (302) ferner dazu ausgelegt ist, den Ziel-Multibiometrie-Identifikationsmodus von den M Multibiometrie-Identifikationsmodi auf der Basis der L Prüfprotokolle auszuwählen.

11. Vorrichtung gemäß Anspruch 10,
wobei der Leistungsparameter in jedem der L Prüfprotokolle gespeichert ist;
die Erfassungseinheit (301) ferner dazu ausgelegt ist, einen Evaluationswert, der jedem der M Multibiometrie-Identifikationsmodi entspricht, auf der Basis des aufgezeichneten Leistungsparameters und eines vordefinierten Gewichts, das jedem Leistungsparameter entspricht, zu erfassen, um M Evaluationswerte zu erhalten; und

die Auswahleinheit (302) ferner dazu ausgelegt ist, den Multibiometrie-Identifikationsmodus, der einem Maximum der M Evaluationswerte entspricht, als den Ziel-Multibiometrie-Identifikationsmodus auszuwählen.

**12.** Vorrichtung gemäß Anspruch 10 oder 11,
wobei die Erfassungseinheit (301) ferner dazu ausgelegt ist, N Biometrie-Identifikationsmodi auf der Basis des Szenenparameters und des Umgebungsparameters zu erfassen,
wobei N eine Ganzzahl größer als 1 ist;
Erfassen von R Multibiometrie-Identifikationsmodi von den M Multibiometrie-Identifikationsmodi,
wobei die R Multibiometrie-Identifikationsmodi durch die N Biometrie-Identifikationsmodi festgelegt werden und R eine positive Ganzzahl kleiner als M ist; und
Erfassen der L Prüfprotokolle, die den R Multibiometrie-Identifikationsmodi entsprechen, von der Prüfhistorie.

**13.** Vorrichtung gemäß einem der Ansprüche 9 bis 12,
wobei die Auswahleinheit (302) ferner dazu ausgelegt ist, einen alternativen Multibiometrie-Identifikationsmodus von M-1 Multibiometrie-Identifikationsmodi in Reaktion auf die S Stücke von Biometrieinformationen, die mindestens ein Stück von Biometrieinformationen umfassen, das bei der Überprüfung durchgefallen ist, auszuwählen,
wobei die M-1 Multibiometrie-Identifikationsmodi die M Multibiometrie-Identifikationsmodi sind, bei denen der Ziel-Multibiometrie-Identifikationsmodus eliminiert wurde.

**14.** Vorrichtung gemäß einem der Ansprüche 9 bis 13,
wobei die Auswahleinheit (302) ferner dazu ausgelegt ist, K Multibiometrie-Identifikationsmodi unter Ausschluss eines Referenz-Biometrie-Identifikationsmodus von den M-1 Multibiometrie-Identifikationsmodi auszuwählen,
wobei K eine positive Ganzzahl kleiner als M-1 ist und der Referenz-Biometrie-Identifikationsmodus dem einen Stück von Biometrieinformationen entspricht, das bei der Überprüfung durchgefallen ist; und
Auswählen des Multibiometrie-Identifikationsmodus, der dem Szenenparameter und dem Umgebungsparameter entspricht, von den K Multibiometrie-Identifikationsmodi, als den alternativen Multibiometrie-Identifikationsmodus.

**15.** Mobiles Endgerät (600), das einen Prozessor (610), einen nicht-transitorischen Speicher (620), eine Kommunikationsschnittstelle (630) und ein oder mehrere Programme (640) umfasst,
wobei die ein oder mehreren Programme (640) in dem nicht-transitorischen Speicher (620) gespeichert und dazu ausgelegt sind, durch den Prozessor (610) ausgeführt zu werden, und
die ein oder mehreren Programme eine Anweisung zum Ausführen von Operationen des Verfahrens gemäß einem der Ansprüche 1 bis 8 umfassen.

**Revendications**

**1.** Procédé de commande de déverrouillage réalisé par un terminal mobile, **caractérisé en ce qu'**il comprend les étapes consistant à :

acquérir (201) un paramètre de scène d'un terminal mobile ;
acquérir (202) un paramètre d'environnement du terminal mobile ;
sélectionner (203) un mode d'identification multibiométrique cible correspondant au paramètre de scène et au paramètre d'environnement parmi M modes d'identification multibiométriques stockés dans le terminal mobile, M étant un entier supérieur à 1 et le paramètre de scène comprenant au moins un paramètre sélectionné dans le groupe consistant en : un type de l'application, une occupation de vitesse de réseau, une transmission de données et un type des données ; et
collecter (204) S éléments d'information biométrique par l'intermédiaire d'un module de collecte biométrique cible correspondant au mode d'identification multibiométrique cible, et déverrouiller le terminal mobile en réponse à la détermination du fait que les S éléments d'information biométrique ont réussi une vérification, S étant un entier supérieur à 1,
le mode d'identification multibiométrique cible étant sélectionné sur la base d'un paramètre de performances enregistré dans un enregistrement de vérification d'un historique de vérification, et le paramètre de performances comprenant un temps consommé par chaque vérification, un score de concordance de chaque vérification et une consommation d'énergie d'un appareil de collecte biométrique pour chaque vérification.

**2.** Procédé selon la revendication 1, dans lequel la sélection (203) d'un mode d'identification multibiométrique cible correspondant au paramètre de scène et au paramètre d'environnement parmi M modes d'identification multibiométriques stockés dans le terminal mobile comprend les étapes consistant à :

acquérir dans l'historique de vérification L enregistrements de vérification correspondant au paramètre de scène et au paramètre d'environnement, L étant un entier supérieur à 1 ; et

sélectionner le mode d'identification multibiométrique cible parmi les M modes d'identification multibiométriques sur la base des L enregistrements de vérification.

3. Procédé selon la revendication 2, dans lequel le paramètre de performances est enregistré dans les L enregistrements de vérification, et la sélection du mode d'identification multibiométrique cible parmi les M modes d'identification multibiométriques sur la base des L enregistrements de vérification comprend les étapes consistant à :

acquérir une valeur d'évaluation correspondant à chacun des M modes d'identification multibiométriques sur la base du paramètre de performances enregistré dans chacun des L enregistrements de vérification et d'une pondération prédéfinie correspondant à chaque paramètre de performances afin d'obtenir M valeurs d'évaluation ; et

sélectionner le mode d'identification multibiométrique correspondant à un maximum des M valeurs d'évaluation en guise de mode d'identification multibiométrique cible.

4. Procédé selon la revendication 2 ou 3, dans lequel l'acquisition dans un historique de vérification de L enregistrements de vérification correspondant au paramètre de scène et au paramètre d'environnement comprend les étapes consistant à :

acquérir N modes d'identification biométriques sur la base du paramètre de scène et du paramètre d'environnement, N étant un entier supérieur à 1 ;

acquérir R modes d'identification multibiométriques parmi les M modes d'identification multibiométriques, les R modes d'identification multibiométriques étant établis par les N modes d'identification biométriques et R étant un entier positif inférieur à M ; et

acquérir dans l'historique de vérification les L enregistrements de vérification correspondant aux R modes d'identification multibiométriques.

5. Procédé selon l'une quelconque des revendications 1 à 4, comprenant en outre l'étape consistant à :
sélectionner un mode d'identification multibiométrique alternatif parmi M-1 modes d'identification multibiométriques en réponse au fait que les S éléments d'information biométrique comprennent au moins un élément d'information biométrique qui a échoué dans la vérification, les M-1 modes d'identification multibiométriques étant les M modes d'identification multibiométriques avec le mode d'identification multibiométrique cible éliminé.

6. Procédé selon la revendication 5, dans lequel la sélection d'un mode d'identification multibiométrique alternatif parmi M-1 modes d'identification multibiométriques, en réponse au fait que les S éléments d'information biométrique comprennent au moins un élément d'information biométrique qui a échoué dans la vérification, comprend les étapes consistant à :

sélectionner K modes d'identification multibiométriques excluant un mode d'identification biométrique de référence des M-1 modes d'identification multibiométriques, K étant un entier positif inférieur à M-1 et le mode d'identification biométrique de référence correspondant audit élément d'information biométrique qui a échoué dans la vérification ; et

sélectionner le mode d'identification multibiométrique correspondant au paramètre de scène et au paramètre d'environnement parmi les K modes d'identification multibiométriques en guise de mode d'identification multibiométrique alternatif.

7. Procédé selon l'une quelconque des revendications 1 à 4, comprenant en outre les étapes consistant à :

en réponse au fait que les S éléments d'information biométrique comprennent au moins un élément d'information biométrique qui échoue dans la vérification et au moins un élément d'information biométrique qui réussit la vérification, acquérir un facteur de sécurité cible correspondant à l'au moins un élément d'information biométrique qui réussit la vérification ; et

déterminer que les S éléments d'information biométrique réussissent la vérification en réponse au fait que le facteur de sécurité cible est supérieur à un seuil de vérification.

**8.** Procédé selon la revendication 7, dans lequel l'acquisition d'un facteur de sécurité cible correspondant à l'au moins un élément d'information biométrique qui a réussi la vérification comprend les étapes consistant à :

acquérir au moins un mode biométrique de référence correspondant à chacun de l'au moins un élément d'information biométrique qui échoue qui a réussi la vérification ;
acquérir un taux de réussite de déverrouillage de chacun de l'au moins un mode biométrique de référence correspondant au paramètre de scène et au paramètre d'environnement ; et
acquérir le facteur de sécurité cible sur la base de chaque taux de réussite de déverrouillage.

**9.** Appareil de commande de déverrouillage, comprenant :

une unité d'acquisition (301), configurée pour acquérir un paramètre de scène et un paramètre d'environnement d'un terminal mobile, le paramètre de scène comprenant au moins un paramètre sélectionné dans le groupe consistant en : un type de l'application, une occupation de vitesse de réseau, une transmission de données et un type des données ;
une unité de sélection (302), configurée pour sélectionner un mode d'identification multibiométrique cible correspondant au paramètre de scène et au paramètre d'environnement parmi M modes d'identification multibiométriques stockés dans le terminal mobile, M étant un entier supérieur à 1 ;
une unité de collecte (303), configurée pour collecter S éléments d'information biométrique, S étant un entier supérieur ou égal à 1 ; et
une unité de déverrouillage (304), configurée pour déverrouiller le terminal mobile en réponse au fait que les S éléments d'information biométrique ont réussi une vérification,
le mode d'identification multibiométrique cible étant sélectionné sur la base d'un paramètre de performances enregistré dans un enregistrement de vérification d'un historique de vérification, et le paramètre de performances comprenant un temps consommé par chaque vérification, un score de concordance de chaque vérification et une consommation d'énergie d'un appareil de collecte biométrique pour chaque vérification.

**10.** Appareil selon la revendication 9, dans lequel :

l'unité d'acquisition (301) est en outre configurée pour acquérir dans l'historique de vérification L enregistrements de vérification correspondant au paramètre de scène et au paramètre d'environnement, L étant un entier supérieur à 1 ; et
l'unité de sélection (302) est en outre configurée pour sélectionner le mode d'identification multibiométrique cible parmi les M modes d'identification multibiométriques sur la base des L enregistrements de vérification.

**11.** Appareil selon la revendication 10, dans lequel :

le paramètre de performances est stocké dans chacun des L enregistrements de vérification ;
l'unité d'acquisition (301) est en outre configurée pour acquérir une valeur d'évaluation correspondant à chacun des M modes d'identification multibiométriques sur la base du paramètre de performances enregistré et d'une pondération prédéfinie correspondant à chaque paramètre de performances afin d'obtenir M valeurs d'évaluation ; et
l'unité de sélection (302) est en outre configurée pour sélectionner le mode d'identification multibiométrique correspondant à un maximum des M valeurs d'évaluation en guise de mode d'identification multibiométrique cible.

**12.** Appareil selon la revendication 10 ou 11, dans lequel l'unité d'acquisition (301) est en outre configurée pour acquérir N modes d'identification biométriques sur la base du paramètre de scène et du paramètre d'environnement, N étant un entier supérieur à 1 ; acquérir R modes d'identification multibiométriques parmi les M modes d'identification multibiométriques, les R modes d'identification multibiométriques étant établis par les N modes d'identification biométriques et R étant un entier positif inférieur à M ; et acquérir dans l'historique de vérification les L enregistrements de vérification correspondant aux R modes d'identification multibiométriques.

**13.** Appareil selon l'une quelconque des revendications 9 à 12, dans lequel l'unité de sélection (302) est en outre configurée pour sélectionner un mode d'identification multibiométrique alternatif parmi M-1 modes d'identification multibiométriques en réponse au fait que les S éléments d'information biométrique comprennent au moins un élément d'information biométrique qui a échoué dans la vérification, les M-1 modes d'identification multibiométriques étant les M modes d'identification multibiométriques avec le mode d'identification multibiométrique cible éliminé.

**14.** Appareil selon l'une quelconque des revendications 9 à 13, dans lequel l'unité de sélection (302) est en outre configurée pour sélectionner K modes d'identification multibiométriques excluant un mode d'identification biométrique de référence des M-1 modes d'identification multibiométriques, K étant un entier positif inférieur à M-1 et le mode d'identification biométrique de référence correspondant audit élément d'information biométrique qui a échoué dans la vérification ; et sélectionner le mode d'identification multibiométrique correspondant au paramètre de scène et au paramètre d'environnement parmi les K modes d'identification multibiométriques en guise de mode d'identification multibiométrique alternatif.

**15.** Terminal mobile (600), comprenant un processeur (610), une mémoire non temporaire (620), une interface de communication (630) et un ou plusieurs programmes (640), le ou les programmes (640) étant stockés dans la mémoire non temporaire (620) et configurés pour être exécutés par le processeur (610), et le ou les programmes comprenant une instruction pour exécuter des opérations du procédé selon l'une quelconque des revendications 1 à 8.

100

21 22 23 130 110

16

11

13

120

14

12

15

26

25

24 27

FIG. 1

| a scene parameter of the mobile terminal may be acquired | 201 |

| an environment parameter of the mobile terminal may be acquired | 202 |

| a target multi-biometric identification mode corresponding to the scene parameter and the environment parameter may be selected from M multi-biometric identification modes stored in the mobile terminal | 203 |

| S pieces of biometric information may be collected through a target biometric collection module corresponding to the target multi-biometric identification mode, and the mobile terminal may be unlocked in response to the S Pieces of biometric information being determined as passing the verification | 204 |

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016060738 A1

- EP 3188406 A1